(19) **Europäisches Patentamt**
**European Patent Office**
**Office européen des brevets**

(11) **EP 2 698 928 A1**

(12) **EUROPEAN PATENT APPLICATION**
published in accordance with Art. 153(4) EPC

(43) Date of publication:
**19.02.2014 Bulletin 2014/08**

(21) Application number: **12771953.2**

(22) Date of filing: **09.03.2012**

(51) Int Cl.:
**H04B 7/04** (2006.01)

(86) International application number:
**PCT/KR2012/001729**

(87) International publication number:
**WO 2012/141428 (18.10.2012 Gazette 2012/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2011 US 201161475208 P**
**25.04.2011 US 201161478555 P**

(71) Applicant: **LG Electronics Inc.**
**Yeongdeungpo-gu**
**Seoul 150-721 (KR)**

(72) Inventors:
• **CHUN, Jinyoung**
**Anyang-si**
**Gyeonggi-do 431-080 (KR)**
• **KIM, Kitae**
**Anyang-si**
**Gyeonggi-do 431-080 (KR)**

• **KIM, Sunam**
**Anyang-si**
**Gyeonggi-do 431-080 (KR)**
• **KANG, Jiwon**
**Anyang-si**
**Gyeonggi-do 431-080 (KR)**
• **IHM, Binchul**
**Anyang-si**
**Gyeonggi-do 431-080 (KR)**
• **PARK, Sungho**
**Anyang-si**
**Gyeonggi-do 431-080 (KR)**

(74) Representative: **Katérle, Axel**
**Wuesthoff & Wuesthoff**
**Patent- und Rechtsanwälte**
**Schweigerstraße 2**
**81541 München (DE)**

(54) **METHOD FOR TRANSCEIVING CHANNEL STATUS INFORMATION AND TRANSCEIVER**

(57) According to the present invention, a method of a terminal to transmit channel status information in a multi distributed node system includes: receiving a request for a channel status information report on a plurality of nodes from a network; calculating channel status information on the plurality of nodes; and transmitting the calculated channel status information to the network. The channel status information includes information on a correlation between the plurality of nodes. The information on the correlation provides a method for transmitting channel status information, which includes an index in a layer combination table representing the degree of correlation between nodes.

FIG. 3

Network     User equipment

S110 — Request report of channel state information on plurality of nodes

Calculate PMI and/or CPMI for each node — S120

Transmit calculated PMI and/or CPMI and information on correlation level — S130

EP 2 698 928 A1

**Description**

## TECHNICAL FIELD

The present invention relates to wireless communications, and more particularly, to a method and apparatus for transceiving channel state information in a distributed multi-node system (DMNS).

## BACKGROUND ART

Recently, data traffic for a network within a wireless communication system is increasing rapidly in a wireless communication environment due to the advent and spread of various kinds of high data traffic requiring devices such as M2M devices having M2M (machine-to-machine) communications applied thereto, smart phones, tablet computers and the like. In order to meet such a massive data traffic, communication technologies are being developed into such a category to efficiently use more frequency bands as carrier aggregation technology, cognitive radio technology and the like and such a category to increase data capacity within a limited frequency as multi-antenna technology, multi-base station coordination technology and the like. And, a wireless communication environment is being evolved in a direction to increase density of nodes accessible around users. In particular, such a system equipped with high node density may provide enhanced system performance owing to inter-node coordination. This system may perform cooperative communications using a plurality of nodes each of which plays a role as a base station (e.g., advanced BS, Node-B, eNode-B, AP (access point), antenna, antenna group, RRH (radio remote header), RRH (radio remote unit), etc.).

Moreover, as transmissions and receptions of all nodes are controlled by a single controller, if an individual node works as a partial antenna group of one base station, this system may be regarded as one DNS (distributed antenna system). In particular, a separate Node ID may be given to each individual node or may work as a partial antenna within a cell without a separate Node ID.

Meanwhile, if each node in DMNS perform scheduling and handover with a different cell ID, it may be regarded as a multi-cell (e.g., macro cell, femto cell, pico cell, etc.) system. In case that multiple cells respectively formed by a plurality of nodes are configured in a manner of being overlaid in accordance with coverage, this may be named a multi-layer (multi-tier) network.

Meanwhile, base stations of various types may be used as nodes irrespective of their names, respectively. In particular, any one of BS (Base Station), NB (Node-B), eNB (eNode-B), pico-cell eNB (PeNB), Home eNB (HeNB), RRH, RRH, relay, repeater and the like may become a node. At least one antenna is installed at one node. In this case, an antenna may mean a physical antenna or one of an antenna port, a virtual antenna and an antenna group. And, a node may be called a point.

Although a node may normally indicate an antenna group spaced apart over a predetermined interval, a node may be applicable in case of meaning a random antenna group irrespective of interval. For instance, a base station may be defined to control a node consisting of H-pol antenna and a node consisting of V-pol antenna.

## DISCLOSURE OF THE INVENTION

## TECHNICAL TASK

Accordingly, the present invention provides a method of efficiently transceiving channel state information for inter-node cooperative transmission in a distributed multi-node system (DMNS) and apparatus therefor.

Technical tasks obtainable from the present invention are non-limited by the above-mentioned technical tasks. And, other unmentioned technical tasks can be clearly understood from the following description by those having ordinary skill in the technical field to which the present invention pertains.

## TECHNICAL SOLUTIONS

To achieve these and other advantages and in accordance with the purpose of the present invention, as embodied and broadly described, a method of transmitting channel state information by a user equipment in a distributed multi-node system, according to one embodiment of the present invention may include receiving a request for reporting channel state information on a plurality of nodes from a network, calculating the channel state information on the plurality of the nodes, and transmitting the calculated channel state information to the network, wherein the channel state information includes information on correlation between the plurality of the nodes and wherein the information on the correlation includes an index in a table of layer combination representing an inter-node correlation level.

To further achieve these and other advantages and in accordance with the purpose of the present invention, a method of receiving channel state information by a network in a distributed multi-node system, according to another embodiment of the present invention may include transmitting a request for reporting channel state information on a plurality of nodes and receiving the channel state information on the plurality of the nodes, wherein the received channel state information includes information on correlation between the plurality of the nodes and wherein the information on the correlation includes an index in a table of layer combination indicating an inter-node correlation level.

To further achieve these and other advantages and in accordance with the purpose of the present invention, an apparatus for transmitting channel state information in a distributed multi-node system according to another embodiment of the present invention may include a transmitter, a receiver, and a processor controlling the receiver to receive a request for reporting channel state information on a plurality of nodes from a network, the processor calculating the channel state information on the plurality of the nodes, the processor controlling the transmitter to transmit the calculated channel state information to the network, wherein the channel state information includes information on correlation between the plurality of the nodes and wherein the information on the correlation includes an index in a table of layer combination indicating an inter-node correlation level.

To further achieve these and other advantages and in accordance with the purpose of the present invention, an apparatus for receiving channel state information in a distributed multi-node system according to a further embodiment of the present invention may include a transmitter, a receiver, and a processor controlling the transmitter to transmit a request for reporting channel state information on a plurality of nodes, the processor controlling the receiver to receive the channel state information on the plurality of the nodes, wherein the received channel state information includes information on correlation between the plurality of the nodes and wherein the information on the correlation includes an index in a table of layer combination indicating an inter-node correlation level.

Preferably, the information on the correlation includes rank information on each of a plurality of the nodes.

Preferably, the information on the correlation includes information on a full transmission rank.

Preferably, the table of the layer combination is determined depending on a rank for each of the plurality of the nodes and a full transmission rank.

More preferably, when ranks for the plurality of the nodes are sorted by a predetermined reference, if a same configuration is provided, a same layer combination table is used.

## ADVANTAGEOUS EFFECTS

According to the present invention, a user equipment can efficiently transceive channel state information for inter-node cooperative transmission in a distributed multi-node system (DMNS) and a network can efficiently transceive data using the transceived channel state information.

Effects obtainable from the present invention are non-limited by the above mentioned effect. And, other unmentioned effects can be clearly understood from the following description by those having ordinary skill in the technical field to which the present invention pertains.

## DESCRIPTION OF DRAWINGS

FIG. 1 is a block diagram for configuration of a user equipment and a base station according to the present invention.
FIG. 2 is a diagram for one example of a multi-node (DAS) system according to the present invention.
FIG. 3 is a diagram for a channel state information transmitting process according to a 1st embodiment of the present invention.
FIG. 4 is a diagram for a channel state information transmitting process according to a 2nd embodiment of the present invention.

## BEST MODE FOR INVENTION

Reference will now be made in detail to the preferred embodiments of the present invention, examples of which are illustrated in the accompanying drawings. Detailed description disclosed together with the accompanying drawings is intended to explain not a unique embodiment of the present invention but an exemplary embodiment of the present invention.

In the following detailed description of the invention includes details to help the full understanding of the present invention. Yet, it is apparent to those skilled in the art that the present invention can be implemented without these details. And, techniques, apparatuses (devices) and systems described in the following description may be applicable to various kinds of wireless multiple access systems. For example, the multiple access system may include one of CDMA (code division multiple access), FDMA (frequency division multiple access), TDMA (time division multiple access), OFDMA (orthogonal frequency division multiple access), SC-FDMA (single carrier frequency division multiple access) and the like. CDMA may be implemented by such a wireless or radio technology as UTRA (universal terrestrial radio access), CDMA 2000 and the like. TDMA may be implemented with such a wireless technology as GSM (Global System for Mobile communications), GPRS (General Packet Radio Service), EDGE (Enhanced Data Rates for GSM Evolution) and the like. OFDMA may be implemented with such a wireless technology as IEEE (Institute of Electrical and Electronics Engineers) 802.11 (Wi-Fi), IEEE 802.16 (WiMAX), IEEE 802.20, E-UTRA (Evolved UTRA), etc. UTRAN is a part of UMTS (Universal Mobile Telecommunications System). 3GPP (3rd Generation Partnership Project) LTE (long term evolution) is a part of E-UMTS (Evolved UMTS) that uses E-UTRAN. The 3GPP LTE adopts OFDMA in downlink (DL) and SC-FDMA in uplink (UL). And, LTE-A (LTE-Advanced) is an evolved version of 3GPP LTE. For clarity, the following description mainly concerns a case that the present invention is applied to 3GPP LTE/LTE-A, by which the present invention is non-limited. For instance, although the detailed description of the invent may be based on a wireless communication system corresponding to 3GPP LTE/LTE-A system, it may be applicable to other random wireless communication systems except items unique to 3GPP LTE/LTE-A.

Occasionally, to prevent the present invention from getting vaguer, structures and/or devices known to the public may be skipped or represented as block diagrams centering on the core functions of the structures and/or devices. Wherever possible, the same reference numbers will be used throughout the drawings to refer to the same or like parts.

Besides, in the following description, a terminal may be stationary or may have mobility. And, the terminal may be a common name of a device for transceiving various kinds of data and control informations by communicating with a base station. The terminal may be named one of a user equipment (UE), a mobile station (MS), a mobile terminal (MT), a user terminal (UT), a subscriber station (SS), a wireless device, a personal digital assistant (PDA), a wireless modem, a handheld device and the like.

A base station generally means a fixed station communicating with a terminal or other base stations and exchanges various kinds of data and control informations by communicating with a terminal and other base stations. The base station may be named such a terminology as eNB (evolved-NodeB), BTS (Base Transceiver System), ABS (Advanced Base station), BS (Base station), PS (Processing Server), RRH (Radio Remote Header), AP (Access Point) and the like.

In the present invention, a rank or a transmission rank may mean the number of layers multiplexed with or assigned to one OFDM symbol or one resource element (RE).

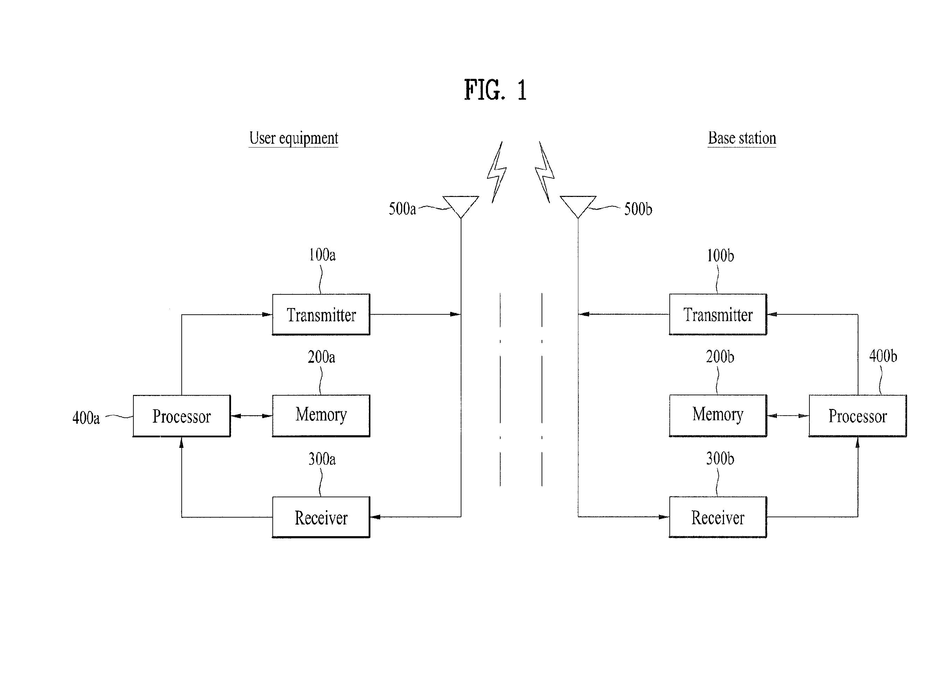

FIG. 1 is a block diagram for configuration of a user equipment and a base station, to which the present invention is applied. In particular, a user equipment works as a transmitting device in UL or works as a receiving device in DL. On the contrary, a base station works as a receiving device in UL or works as a transmitting device in DL.

Referring to FIG. 1, a user equipment/base station UE/BS) may include an antenna 500a/500b capable of transmitting and receiving information, data, signals and/or messages and the like, a transmitter 100a/100b transmitting information, data, signals and/or messages by controlling the antenna 500a/500b, a receiver 300a/300b receiving information, data, signals and/or messages by controlling the antenna 500a/500b and a memory 200a/200b storing various kinds of informations within a wireless communication system temporarily or permanently. Moreover, the user equipment/ base station may further include a processor 400a/400b controlling various components by being operatively connected to the components including the transmitter, the receiver, the memory and the like.

The transmitter 100a, the receiver 300a, the memory 200a and the processor 400a in the user equipment may be implemented with separate chips as independent components, respectively. Alternatively, at least two of the transmitter 100a, the receiver 300a, the memory 200a and the processor 400a in the user equipment may be implemented with a single chip. On the other hand, the transmitter 100b, the receiver 300b, the memory 200b and the processor 400b in the base station may be implemented with separate chips as independent components, respectively. Alternatively, at least two of the transmitter 100b, the receiver 300b, the memory 200b and the processor 400b in the base station may be implemented with a single chip. Alternatively, the transmitter and the receiver may be integrated into a single transceiver in the user equipment or the base station.

The antenna 500a/500b may play a role in externally transmitting a signal generated from the transmitter 100a/ 100b. And, the antenna 500a/500b may play a role in receiving a signal from outside and then delivering the received signal to the receiver 300a/300b. Moreover, the antenna 500a/500b may be called an antenna port. In this case, the antenna port may correspond to a single physical antenna or may be configured by a combination of a plurality of physical antennas. In case that MIMO (multi-input multi-output) function of transceiving data and the like using a plurality of antennas is supported by a transceiver, at least two antennas may be connected to the transceiver.

The processor 400a/400b may generally control overall operations of various components or modules in the mobile/base station. In particular, the processor 400a/400b may be able to perform various control functions to implement the above-described embodiments of the present invention, a MAC (medium access control) frame variable control function according to service characteristics and propagation environment, a power saving mode function of controlling an idle mode operation, a handover function, an authentication and encryption function and the like. And, the processor 400a/400b may be named one of a controller, a microcontroller, a microprocessor, a microcomputer and the like. Moreover, the processor 400a/400b may be implemented by hardware, firmware, software or a combination thereof.

In case of implementing the present invention using hardware, the processor 400a/400b may be provided with such a configuration to perform the present invention as ASICs (application specific integrated circuits), DSPs (digital signal processors), DSPDs (digital signal processing devices), PLDs (programmable logic devices), FPGAs (field programmable gate arrays), and the like.

In case of implementing the present invention using firmware or software, the firmware or software may be configured to include modules, procedures, and/or functions for performing the functions or operations of the present invention. And, the firmware or software configured to perform the present invention may be driven by the processor 400a/400b in a manner of being loaded in the processor 400a/400b or being saved in the memory 200a/200b.

The transmitter 100a/100b may perform prescribed coding and modulation on a signal and/or data, which is scheduled by the processor 400a/400b or a scheduler connected to the processor 400a/400b and will be then transmitted externally, and may be then able to deliver the coded and modulated signal and/or data to the antenna 500a/500b.

The memory 200a/200b may store programs for processing and control of the processor 400a/400b and may be able to temporarily store input/output information. And, the memory 200a/200b may be utilized as a buffer. Moreover, the memory 200a/200b may include at least one of storage media including a flash type memory, a hard disk type memory, a multimedia card micro type memory, a memory card type memory (e.g., SD memory, XD memory, etc.), a RAM (random access memory), an SRAM (static random access memory), a ROM (read-only memory), an EEPROM (electrically erasable programmable read-only memory), a PROM (programmable read-only memory), a magnetic memory, a magnetic disk, an optical disk and the like.

Provided with the above configurations, a user equipment and a base station may perform various methods according to embodiments described in the following.

When a signal is transmitted in a wireless communication system, since the transmitted data is transmitted on a radio channel, signal distortion may occur in the course of the transmission. In order for a receiving side to correctly receive the distorted signal, distortion in a received signal should be corrected using channel information. In order to acquire the channel information, after a signal known to both a receiving side and a transmitting side has been transmitted, the channel information can be acquired with a degree of distortion on receiving the signal on a channel. This signal may be called a pilot signal or a reference signal. In case of transmitting or receiving a signal using multi-antenna port, channel information between each transmitting antenna port and each receiving antenna port should be obtained to receive a correct signal. Hence, a separate reference signal needs to be present for each transmitting antenna port.

Reference signals may include a common reference signal (CRS) shared with all user equipments in a cell and a dedicated reference signal (DRS) for a specific user equipment only. By these reference signals, information for channel estimation and demodulation can be provided.

A receiving side estimates a state of a channel from CRS and may be able to feed back such channel information as CQI (Channel Quality Indicator), PMI (Precoding Matrix Index) and RI (Rank Indicator) to a transmitting side. The CRS may be called a cell-specific reference signal. Meanwhile, DRS may be transmitted on a corresponding resource element (RE) if demodulation of data on PDSCH is necessary. The DRS may be named a UE-specific reference signal or a demodulation reference signal (DMRS).

CRS is a reference signal which can be commonly received by all user equipments in a cell. CRS is distributed across a full band of a frequency. CRS can be defined in various forms depending on antenna configurations of a transmitting side. In case that a transmitting side performs single antenna transmission, CRS for a single antenna port is arranged. In case that a transmitting side performs 2-antena port transmission, CRSs for 2 antenna ports are arranged by time division multiplexing (TDM) and/or frequency division multiplexing (FDM). In particular, as CRSs for 2 antenna ports are arranged on different time resources and/or different frequency resources, respectively, the CRSs can be discriminated from each other. In case that a transmitting side performs 4-antena port transmission, CRSs for 4 antenna ports are arranged by TDM/FDM.

Meanwhile, in LTE-A Release 10 (hereinafter abbreviated Rel-10) system, data can be transmitted and received through maximum 8 antenna ports. Due to this reason, if a reference signal pattern for the maximum 8 antenna ports is added to a full band in each subframe by the same scheme of CRS in an existing LTE system, it may cause a problem that overhead increases excessively. Hence, CSI-RS (channel state information reference signal) has been proposed for the purpose of channel measurement of PDSCH for Rel-10 user equipment separately from an existing CRS. The CSI-RS is transmitted for the purpose of obtaining information on a channel state only and is character in being unnecessary to be transmitted in each subframe unlike CRS. The CSI-RS supports heterogeneous network (HetNet). In order to reduce inter-cell interference (ICI) in a multi-cell, different configurations of maximum 32 types of CSI-RS have been proposed. Configurations of CSI-RS differ from each other in accordance with the number of antenna ports in a cell and are set to have different configurations between neighbor cells as far as possible. The CSI-RS configurations are discriminated from each other depending on types of CP and can be sorted into a case of being applied to both FAS and FS2 and a case of supporting FS2 only by frame structures (FS). Unlike CRS, CSI-RS supports maximum 8 antenna ports (e.g., p = 15, p = 15, 16, p = 15, 16, 17, 18 and p = 15, 16, 17, 18, 19, 20, 21, 22) and is defined for '$\Delta f$ = 15 khz' only.

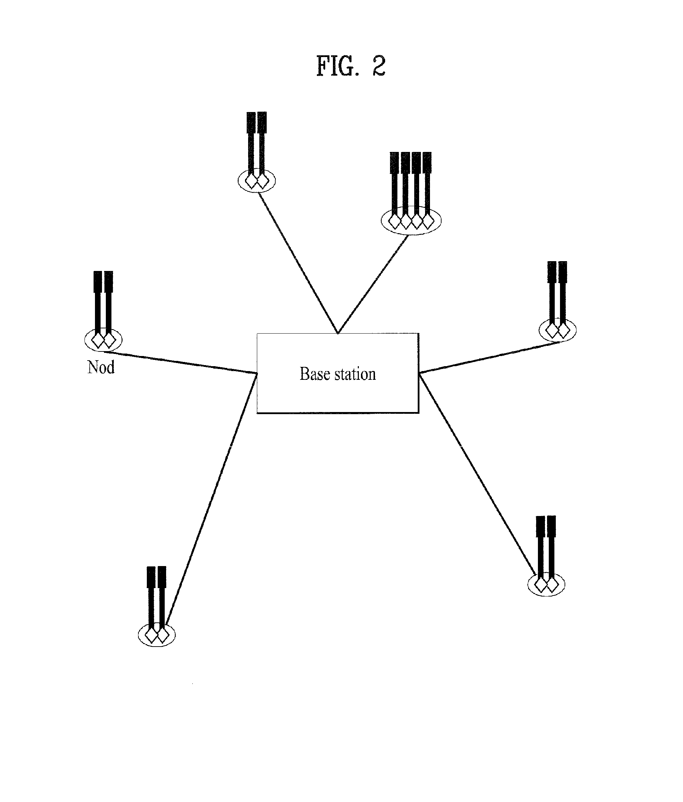

FIG. 2 is a diagram for one example of a multi-node (DAS) system according to the present invention. In particular, FIG. 2 shows one example of a distributed multi-node system (hereinafter abbreviated DMNS) of DNS.

Referring to FIG. 2, in DMNS, a plurality of nodes located in a predetermined geographical area by being spaced apart from each other over a predetermined interval are connected to one base station or one base station controller via a cable or a dedicated circuit. In particular, one controller controls or manages transmissions and receptions via all nodes located within a predetermined geographical area.

Meanwhile, although FIG. 2 shows a case that one controller controls or manages transmissions and receptions via all nodes located within a predetermined geographical area, it is not mandatory for nodes of performing cooperative transmissions to be controlled by one controller only. And, the present invention may be applicable to a case that nodes controlled by different base stations or different base station controllers perform the cooperative transmissions. In particular, in a multi-node system according to the present invention, at least one base station or at least one base station controller connected with a plurality of nodes may control a plurality of the nodes in a manner that signals are simultaneously transmitted to a user equipment via some of the nodes or that a signal is simultaneously received from a user equipment via some of the nodes.

Although there is a difference between multi-node systems in accordance with substantiality of each node and implementation type of each node or the like, the multi-node systems differ from single node systems (e.g., CAS, conventional MIMO system, conventional relay node system, conventional repeater system, etc.) in that a plurality of nodes participate together in providing a communication service to a user equipment on predetermined time-frequency resources. Therefore, embodiments of the present invention relating to a method of performing cooperative transmission using a plurality of nodes entirely or in part may be applicable to multi-node system of various types. For instance, although a node generally indicates an antenna group located by being spaced apart from another node over a predetermined interval, the following embodiments of the present invention may apply to a case that a node means a random antenna group irrespective of such an interval. And, this antenna group may be substituted with one of an antenna port, an antenna pattern, an antenna configuration and the like.

A scheme (or technique) of transmitting/receiving data through a multitude of transmitting/receiving (Tx/Rx) nodes is called multi-BS MIMO or CoMP (coordinated multi-point Tx/RX). A coordinated transmission scheme in the inter-node cooperative communication can be mainly classified into JP (joint processing) and scheduling coordination. The former can be further classified into JT (joint transmission) and DCS (dynamic cell selection). And, the latter can be classified into CS (coordinated scheduling) and CB (coordinated beamforming).

Meanwhile, for an efficient inter-node coordinated transmission, it is able to use feedback information of a user equipment, i.e., channel state information transmitted by the user equipment. This feedback information can be sorted by the two types of the inter-node coordiante4d transmission.

First of all, in case of JP, a user equipment finds a channel value for each node and may then feed back channel state information based on the found channel value. In this case, the channel state information may include CQI (Channel Quality Indicator), PMI (Precoding Matrix Indicators), RI (Rank Indicator) and the like. In particular, the CQI indicates a signal to interference-noise ratio and may be represented as a power level (e.g., decibel) or MCS (modulation and coding) level. And, the PMI may indicate an index of a vector or matrix, which is a component of a codebook retained by a user equipment.

Secondly, in case of scheduling coordination, a user equipment measures a channel of an interfering nod and then calculates a PMI having a largest or smallest interference. If the user equipment delivers the calculated PMI to a serving node, the serving node notifies it to the interfering node. Hence, while the serving node and the user equipment are transceiving data with each other, it is able to control the interfering node to be restricted from using the PMI having a large interference or to use the PMI having a small interference.

In the following description, for a user equipment (particularly, a user equipment having slow mobility), in case of performing JP (e.g., precoding based), a method of determining a precoder for a multitude of nodes using feedback information of the user equipment is explained. For instance, if a user equipment feeds back information on a rank-1 based precoder w1 for node 1, a rank-2 based precoder w2 for node 2 and a rank-3 based precoder w3 for node 3 to a network, the network does not know how to synthesize or combine the precoders of the nodes 1 to 3 to transmit. Due to this reason, the user equipment should fed back additional information on a total transmission rank number for the entire nodes or layer combination.

In IEEE 802.16m system for one example of a mobile communication system, a user equipment fixes a rank value to 1 for each base station and feeds back a rank-1 based PMI (using a codebook or subset), CPMI (concatenating PMI) for connecting PMIs to each other and CQI. This feedback information has a problem that a node participating in coordinated transmission should be maintained for a prescribed period of time and is unable to support a higher rank by reflecting an enhanced rank quality owing to the coordinated transmission.

Therefore, according to an embodiment of the present invention mentioned in the following description, a method of synthesizing or combining a precoder suitable for a higher rank transmission capable of transmitting more layers (or streams) in accordance with a case of dynamically assigning a node participating in JP in accordance with a situation of a network and an enhanced link quality and a channel state information of a user equipment required for the same are explained.

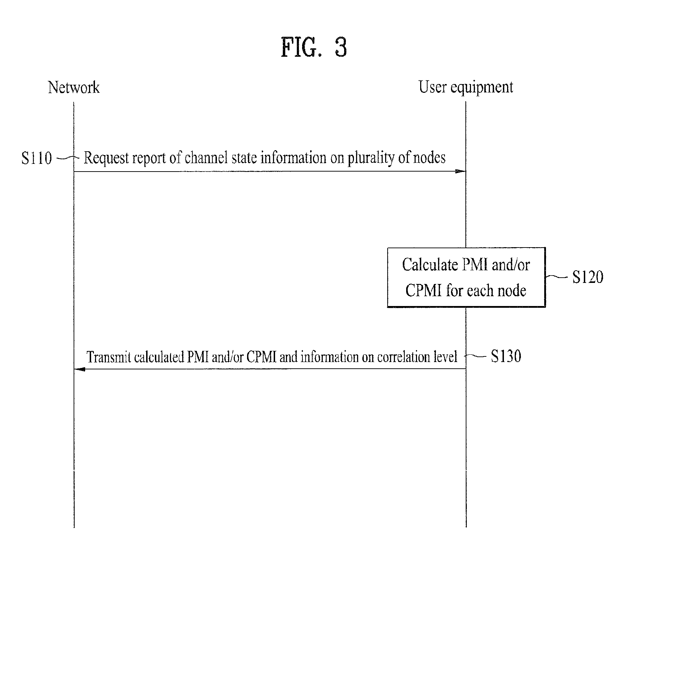

FIG. 3 is a diagram for a channel state information transmitting process according to a 1st embodiment of the present invention.

First of all, a user equipment receives a request for reporting channel state information on a plurality of nodes from a network [S110]. Using a codebook a rank-1 codebook saved in the user equipment, the user equipment calculates PMI for each of the nodes and CPMI corresponding to a phase correction value for each of the nodes [S120] and then feeds back the calculated values to the network [S 130]. In doing so, the user equipment can additionally feed back information on an inter-node correlation value or level [S130].

In the description of the present embodiment, the case of using the rank-1 codebook saved in the user equipment is taken as an example. Yet, it is apparent that a corresponding value can be directly calculated without using the codebook.

Based on the fed-back information on the correlation value or correlation level, the network can synthesize or combines a precoder suitable for each node and use the synthesized or combined precoder in assigning nodes for performing a coordinated transmission.

In particular, if the inter-node correlation value or level is high, the related nodes can be assigned to the same layer. On the contrary, if the inter-node correlation value or level is low, the related nodes can be assigned to different layers, respectively.

For instance, assume that 4 nodes correspond to coordinated transmission target nodes. And, assume that each of the nodes provides 2 transmitting antenna ports. First of all, a user equipment can calculate and feed back PMI (k) (k = 1, 2, 3, 4), CPMI(k) (k = 1, 2, 3, 4) to a network. The node k can transmit data using the fed-back PMI(k) and CPMI(k). MCS (modulation and coding scheme) level of the transmitted data is determined using the received CQI. A received signal of the user equipment can be represented as Formula 1.

[Formula 1]

$$
x = \begin{bmatrix} H_1 & H_2 & H_3 & H_4 \end{bmatrix} \begin{bmatrix} e^{j2\pi b(1)} W(PMI(1)) \\ e^{j2\pi b(2)} W(PMI(2)) \\ e^{j2\pi b(3)} W(PMI(3)) \\ e^{j2\pi b(4)} W(PMI(4)) \end{bmatrix} s + v
$$

The $H_k$ indicates a channel value between the node k (k = 1, 2, 3, 4) and the user equipment. The W(m) indicates a precoding vector corresponding to an index m within a codebook. The b(m) is a value corresponding to CPMI(m) and can correspond to {0, 1/8, 2/8, ... , 7/8}. The s means a transmitted signal or data. And, the v indicates a noise or interference.

In addition to the above mentioned PMI, CPMI and CQI, information on a correlation value or level between inter-node layers is fed back.

For instance, assuming that the number of nodes of performing the coordinated transmission is N, the inter-node correlation can be represented as Formula 2.

[Formula 2]

$$
R = f([\overline{H_1 w_1}\,\overline{H_2 w_2}...\overline{H_N w_N}]^H [\overline{H_1 w_1}\,\overline{H_2 w_2}...\overline{H_N w_N}]) = \begin{bmatrix} r_{11} & r_{12} & \cdots & r_{1N} \\ r_{21} & r_{22} & \cdots & r_{2N} \\ \vdots & \vdots & \vdots & \vdots \\ r_{N1} & r_{N2} & \cdots & r_{NN} \end{bmatrix}
$$

(f: specific function or function of arguments, e.g., ensemble average or f(x) = x)

Correlation matrix R can be determined as Formula 3.

[Formula 3]

$$
\overline{H_i w_i} = H_i w_i / |H_i w_i|
$$

The $H_i$ indicates a channel value between a node i and a user equipment. The $w_i$ indicates a precoder for the node i. The N indicates the total number of nodes. If the node i has a single transmitting antenna port, the $w_i$ has a scalar value.

Meanwhile, matrix elements $r_{11}$, $r_{22}$, ... $r_{NN}$ corresponding to self-correlation values among matrix elements of a correlation matrix R do not need to be fed back. Moreover, matrix elements of a lower triangle part and matrix elements of an upper triangle part are in complex conjugate relationship with each other, it is able to feed back the matrix elements of the upper triangle part (or the lower triangle part) only.

In doing so, values of the matrix elements, i.e., a correlation level or value itself is fed back. Alternatively, the correlation level or value can be fed back by being quantized. For instance, if the correlation level is high or the correlation value is large, it can be represented as 1. For another instance, if the correlation level is low or the correlation value is small, it can be represented as 0.

In particular, assuming the 4 nodes of performing the coordinated transmission, as mentioned in the foregoing example, values of $r_{12}$, $r_{13}$, $r_{14}$, $r_{23}$, $r_{24}$ and $r_{34}$ among the correlation matrix elements or corresponding conjugate or size values are fed back. Alternatively, the values of $r_{12}$, $r_{13}$, $r_{14}$, $r_{23}$, $r_{24}$ and $r_{34}$ are quantized into 0 and 1 and the quantized values can be then fed back.

Based on the received feedback information, in case of allowing some of the 4 nodes to participate in the coordinated transmission, the network can synthesize or combine the precoders in accordance with the correlation between the participating nodes.

For instance, assume that the correlation matrix R represented as correlation is expressed as Formula 4. As mentioned in the foregoing description, '1' indicates a high correlation level and '0' indicates a low correlation level.

[Formula 4]

$$\hat{R} = \begin{bmatrix} x & 1 & 0 & 0 \\ 1 & x & 0 & 0 \\ 0 & 0 & x & 1 \\ 0 & 0 & 1 & x \end{bmatrix}$$

Assuming that the network allows all of the 4 nodes to participate in the coordinated transmission, since a correlation level between the node 1 and the node 2 is high, it can be transmitted through a single layer (or stream). Since a correlation level between the node 3 and the node 4 is high, it can be transmitted through another layer. In this case, the user equipment can receive a signal represented as Formula 5.

[Formula 5]

$$x = \begin{bmatrix} H_1 & H_2 & H_3 & H_4 \end{bmatrix} \begin{bmatrix} e^{j2\pi b(1)}W(PMI(1)) & 0 \\ e^{j2\pi b(2)}W(PMI(2)) & 0 \\ 0 & e^{j2\pi b(3)}W(PMI(3)) \\ 0 & e^{j2\pi b(4)}W(PMI(4)) \end{bmatrix} \begin{bmatrix} s_1 \\ s_2 \end{bmatrix} + v$$

Assuming that the network allows the node 1 and the node 2 to participate in the coordinated transmission only, since a correlation level between the node 1 and the node 2 is high, it can be transmitted through a single layer. In this case, the user equipment can receive a signal represented as Formula 6.

[Formula 6]

$$x = \begin{bmatrix} H_1 & H_2 \end{bmatrix} \begin{bmatrix} e^{j2\pi b(1)}W(PMI(1)) \\ e^{j2\pi b(2)}W(PMI(2)) \end{bmatrix} s + v$$

Meanwhile, if 4 nodes (e.g., nodes 1, 2, 3 and 4) participate in the coordinated transmission, when the user equipment feeds back CPMI, it is able to feed back the CPMI to the nodes 2, 3 and 4 only except the node 1. This is because a phase correction value of the CPMI can be determined with reference to a signal value of the node 1. In particular, it is able to apply the precoding vector W to the node 1 only. Moreover, by expecting that the same layer will be used between nodes having a high correlation level in-between, CPMI can be fed back to the nodes among the nodes having the high correlation level in-between except one node.

For instance, assuming the situation of Formula 5, the node 2 can receive a feedback of the CPMI with reference to the node 1. And, the node 4 can receive a feedback of the CPMI with reference to the node 3.

Meanwhile, the above-mentioned examples are described on the assumption that each node uses the rank-1 based precoder. Yet, a case of using a different rank for each node is extensible as well. In particular, a scheme of determining a correlation between the respective nodes can be extended to include ranks of the respective nodes.

For instance, if the number of nodes performing the coordinated transmission is N and a node i has a rank $R_i$ (particularly, a value of $R_i$ may differ for each node), the total number of layers per node supposed to indicate the correlation can be N expressed as $M = \sum_{i=1}^{N} R_i$. In this case, the correlation matrix R becomes a matrix having a size of 'M × M' represented as Formula 7.

[Formula 7]

$$R = f([\overline{H_1 w_1} \overline{H_2 w_2}...\overline{H_M w_M}]^H [\overline{H_1 w_1} \overline{H_2 w_2}...\overline{H_M w_M}]) = \begin{bmatrix} r_{11} & r_{12} & \cdots & r_{1M} \\ r_{21} & r_{22} & \cdots & r_{2M} \\ \vdots & \vdots & \vdots & \vdots \\ r_{M1} & r_{M2} & \cdots & r_{MM} \end{bmatrix}$$

(f: specific function or function of arguments, e.g., ensemble average or f(x) = x)

The correlation matrix R can be determined as Formula 8.

[Formula 8]

$$\overline{H_i w_i} = [H_i w_i(1)/|H_i w_i(1)|...H_i w_i(R_i)/|H_i w_i(R_i)|]$$

The $H_i$ indicates a channel value between the node i and the user equipment. The $w_i$ indicates a precoder for the node i. The N indicates the total number of nodes. The $H_i w_i(K)$ corresponds to a $k^{th}$ column of the $H_i w_i$. The $R_i$ indicates a rank of the node i. In case that the node i has a single transmitting antenna port, the $w_i$ has a scalar value.

Meanwhile, when the information on the correlation value or level is fed back, values of matrix elements of an upper triangle part (or a lower triangle part) of the correlation matrix R are fed back. And, the number of the matrix values can be expressed as $_M C_2 = M(M-1)/2$. In order to minimize a fed-back information size, if a case of a high correlation level or a large correlation value is represented as 1 or a case of a low correlation level or a small correlation value is represented as 0, total M(M-1)/2 bits become the size of the information on the correlation value or level.

For instance, when there are 4 nodes participating in the coordinated transmission, of all of the nodes support the rank 1, information supposed to be fed back include total 6 including $r_{12}$, $r_{13}$, $r_{14}$, $r_{23}$, $r_{24}$ and $r_{34}$. If they are represented as 0 or 1 respectively, a size of the information supposed to be fed back amounts to 6 bits.

In case that each of the nodes supports the rank 2 or higher, a correlation level between layers in the corresponding node needs not to be fed back. Hence, the size of the fed-back information can be represented as follows.

$$_M C_2 - \sum_{i=1}^{N} {}_{R_i} C_2$$

$$M = \sum_{i=1}^{N} R_i \, , (_k C_2 = 0, \text{ if } k = 1)$$

The N indicates the total number of nodes and the $R_i$ indicates a rank of the node i. And, the M indicates the total number of ranks of the entire nodes.

For instance, if the node 1 supports the rank 2 and the node 3 supports the rank 1, matrix elements of the correlation matrix R supposed to be fed back correspond to $r_{13}$ and $r_{23}$ only among $r_{12}$, $r_{13}$ and $r_{23}$. The network assumes the matrix element r12 corresponding to the correlation in the same node as 0. if a case of a high correlation level or a large correlation value is represented as 1 or a case of a low correlation level or a small correlation value is represented as 0, $_M C_2 - \sum_{i=1}^{N} {}_{R_i} C_2$ bits become the size of the fed-back information.

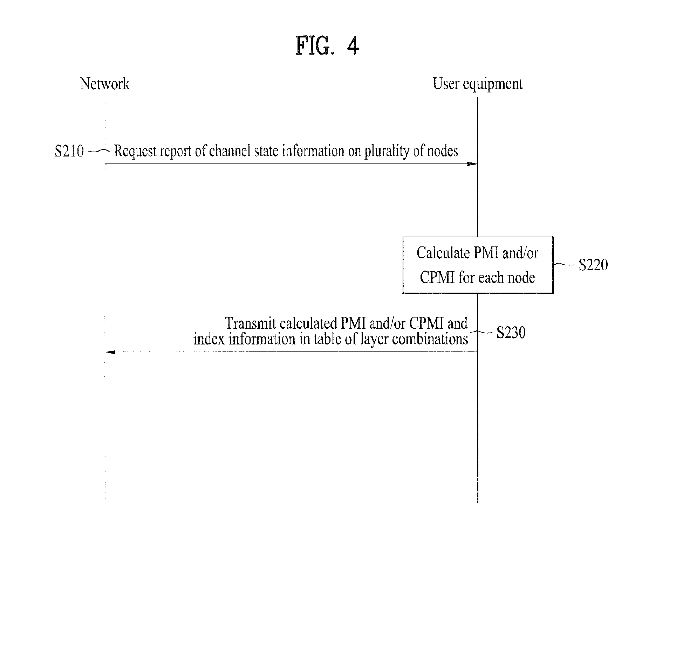

FIG. 4 is a diagram for a channel state information transmitting process according to a 2$^{nd}$ embodiment of the present invention.

First of all, a user equipment receives a request for reporting channel state information on a plurality of nodes from a network [S210].

Subsequently, the user equipment calculates PMI for each of the nodes and CPMI corresponding to a phase correction value for each of the nodes [S220] and then feeds back the calculated values to the network [S230]. Moreover, the user equipment can additionally feed back information on the relationship between a layer per node and a transmission layer [S230]. In particular, the information on the relationship between the layer per node and the transmission layer may correspond to an index in a table of layer combinations or an index value.

For instance, assuming that there are 3 nodes supportive of the rank 1, a correlation matrix R can be determined as Formula 9.

[Formula 9]

$$R = \begin{bmatrix} r_{11} & r_{12} & r_{13} \\ r_{21} & r_{22} & r_{23} \\ r_{31} & r_{23} & r_{33} \end{bmatrix}$$

In this case, regarding the $r_{12}$, $r_{13}$ and $r_{23}$, like the 1$^{st}$ embodiment, if a case of a high correlation level or a large correlation value is represented as 1 or a case of a low correlation level or a small correlation value is represented as 0, it is able to configure various combinations of layers per node in accordance with the combination as shown in Table 1.

[Table 1]

| Index | $r_{12}$, $r_{13}$, $r_{23}$ | Interpretation | Layer combination |
|---|---|---|---|
| 0 | 1, 1, 1 | Nodes 1, 2, 3: Good correlation | All use the same layer (total rank = 1) |
| 1 | 1, 1, 0 | Node 1 & node 2: Good correlation Node 1 & node 3: Good correlation Node 2 & node 3: Poor correlation | Select one of combinations of indexes 0, 4, 5 and 7 |
| 2 | 1, 0, 1 | Node 1 & node 2: Good correlation Node 2 & node 3: Good correlation Node 1 & node 3: Poor correlation | Select one of combinations of indexes 0, 4, 6 and 7 |
| 3 | 0, 1, 1 | Node 1 & node 3: Good correlation Node 2 & node 3: Good correlation Node 1 & node 2: Poor correlation | Select one of combinations of indexes 0, 5, 6 and 7 |
| 4 | 1, 0, 0 | Node 1 & node 2: Good correlation Node 1 & node 3: Poor correlation Node 2 & node 3: Poor correlation | Node 1 & node 2: Use the same layer Node 3: Use a different layer (total rank = 2) |

(continued)

| Index | $r_{12}$, $r_{13}$, $r_{23}$ | Interpretation | Layer combination |
|---|---|---|---|
| 5 | 0, 1, 0 | Node 1 & node 3: Good correlation Node 1 & node 2: Poor correlation Node 2 & node 3: Poor correlation | Node 1 & node 3: Use the same layer Node 2: Use a different layer (total rank = 2) |
| 6 | 0, 0, 1 | Node 2 & node 3: Good correlation Node 1 & node 2: Poor correlation Node 1 & node 3: Poor correlation | Node 2 & node 3: Use the same layer Node 1: Use a different layer (total rank = 2) |
| 7 | 0, 0, 0 | Node 1, 2 & 3: all in poor correlation | Use a different layer per node (total rank = 3) |

Referring to Table 1, some combination (indexes 1, 2 and 3) of correlation can be transmitted as the same layer combination of other index values. For instance, the index 1 shown in Table 1 can be transmitted as a layer combination corresponding to one of the indexes 0, 4, 6 and 7 instead of having a corresponding layer combination determined.

Hence, instead of feeding back all the matrix elements of the correlation matrix R, if a table for layer combinations per node is configured, it can become a method of reducing a size of the fed-back information. In particular, in case of attempting to feed back the matrix elements of the correlation matrix R, 8 kinds of cases (3 bits) are necessary. Yet, if unrealistic cases are excluded by configuring a table (e.g., case of indexes 1, 2 and 3), representation of 5 kinds of cases (3 bits) is possible. This may be more advantageous if the number of nodes participating in the coordinated transmission or the number of layers per node increases.

In the following description, a feedback method using a layer combination scheme is explained. For clarity, the following description is made on the assumption of 3 nodes participating in a coordinated transmission, by which the present invention may be non-limited.

First of all, if a rank of each node is not fed back to a network, a table of all considerable layer combinations can be represented as Table 2.

[Table 2]

| Index | {node 1}{node 2}{node 3} | Index | {node 1}{node 2}{node 3} | Index | {node 1}{node 2}{node 3} |
|---|---|---|---|---|---|
| 0 | {L1}{L1}{L1} | 6 | {L1L2}{L2}{L1} | 12 | {L1}{L1}{L1L2} |
| 1 | {L1}{L1}{L2} | 7 | {L1L2}{L2}{L2} | 13 | {L1}{L2}{L1L2} |
| 2 | {LI}{L2}{L1} | 8 | {L1}{L1L2}{L1} | 14 | {L2}{L1}{L1L2} |
| 3 | {L1}{L2}{L2} | 9 | {L1}{L1L2}{L2} | 15 | {L2}{L2}{L1L2} |
| 4 | {L1L2}{L1}{L1} | 10 | {L2}{L1L2}{L1} | 16 | {L1L2}{L1L2}{L1 } |
| 5 | {L1L2}{L1}{L2} | 11 | {L2}{L1L2}{L2} | ... | ... |

For instance, if the user equipment selects index 10 and then feeds back it to the network, the network is able to aware that the node 1, the node 2 and the node 3 support the rank 1, the rank 2 and the rank 1, respectively, that a layer of the node 1 and a $2^{nd}$ layer of the node 2 configure one transmission layer, and that a $1^{st}$ layer of the node 2 and a layer of the node 3 configure another transmission layer. In the same manner, the user equipment can feed back index values using Table 2.

Secondly, if a rank of each node is fed back to the network or the network sets a rank of each node, it is able to reduce a table volume of the layer combinations. For instance, if each of the node 1, the node 2 and the node 3 supports the rank 1, a table of layer combinations can be represented as Table 3 in the following.

[Table 3]

| Index | {node 1}{node 2}{node 3} | Index | {node 1}{node 2}{node 3} | Index | {node 1}{node 2}{node 3} |
|---|---|---|---|---|---|
| 0 | {L1}{L1}{L1} | 1 | {L1}{L2}{L2} | 2 | {L2}{L1}{L2} |
| 3 | {L2}{L2}{L1} | 4 | {L1}{L2}{L3} | | |

For instance, if the user equipment selects index 3 and then feeds back it to the network, the network is able to aware that the node 1 and the node 2 configure one transmission layer and that the node 3 configures another transmission layer. In the same manner, the user equipment can feed back index values using Table 3. In the table, the Li indicates an $i^{th}$ transmission layer.

Thirdly, in case that the node 1, the node 2 and the node 3 support the rank 2, the rank 1 and the rank 1, respectively, a table of layer combinations can be represented as Table 4 in the following.

[Table 4]

| Index | {node 1}{node 2}{node 3} | Index | {node 1}{node 2}{node 3} | Index | {node 1}{node 2}{node 3} |
|---|---|---|---|---|---|
| 0 | {L1L2}{L1}{L1} | 1 | {L1L2}{L1}{L2} | 2 | {L1L2}{L2}{L1} |
| 3 | {L1L2}{L2}{L2} | 4 | {L1L2}{L1}{L3} | 5 | {L1L2}{L2}{L3} |
| 6 | {L1L2}{L3}{L1} | 7 | {L1L2}{L3}{L2} | 8 | {L1L2}{L3}{L3} |
| 9 | {L1L2}{L3}{L4} | | | | |

For instance, if the user equipment selects index 6 and then feeds back it to the network, the network is able to aware that a $1^{st}$ layer of the node 1 and a layer of the node 3 configure one transmission layer, that a $2^{nd}$ layer of the node 1 configures another transmission layer, and that a layer of the node 2 configures a further transmission layer. In doing so, the total transmission rank corresponds to 3. In the same manner, the user equipment can feed back index values using Table 4.

Fourthly, a table can be configured to enable a presence or non-presence of participation of a layer per node to appear on a transmission layer. For instance, in case that the node 1, the node 2 and the node 3 support the rank 1, a table of layer combinations can be represented as Table 5 in the following.

[Table 5]

| Index | {L1}{L2}{L3}... | Index | {L1}{L2}{L3}... | Index | {L1}{L2}{L3}... |
|---|---|---|---|---|---|
| 0 | {m1,m2,m3} | 1 | {m1}{m2,m3} | 2 | {m2}{m1,m3} |
| 3 | {m3}{m1,m2} | 4 | {m1}{m2}{m3} | | |

In Table 5, the mi indicates a layer per node. In particular, the m1, the m2 and the m3 indicates the per-node layer of the node 1, the per-node layer of the node 2 and the per-node layer of the node 3, respectively. And, the Li indicates an $i^{th}$ transmission layer.

For instance, if the user equipment selects index 1 and then feeds back it to the network, the network is able to aware that a layer of the node 1 configures one transmission layer and that the node 2 and the node 3 configure another transmission layer. In the same manner, the user equipment can feed back index values using Table 5.

Fifthly, in case that the node 1, the node 2 and the node 3 support the rank 2, the rank 1 and the rank 1, respectively, a table of layer combinations can be represented as Table 6 in the following.

[Table 6]

| Index | {L1}{L2}{L3}... | Index | {L1}{L2}{L3}... | Index | {L1}{L2}{L3}... |
|---|---|---|---|---|---|
| 0 | {m1,m3,m4}{m2} | 1 | {m1,m3}{m2,m4} | 2 | {m1,m4}{m2,m3} |
| 3 | {m1}{m2,m3,m4} | 4 | {m1,m3}{m2}{m4 } | 5 | {m1}{m2,m3}{m4 } |
| 6 | {m1,m4}{m2}{m3 } | 7 | {m1}{m2,m4}{m3 } | 8 | {ml}{m2}{m3,m4 } |
| 9 | {m1}{m2}{m3}{m 4} | | | | |

In Table 6, the m1 and the m2 indicate layers per node of the node 1. And, the m3 and the m4 indicate layers per node of the node 2 and the node 3, respectively. Moreover, the user equipment can feed back index values using Table 6.

Sixthly, if ranks of the respective nodes and a total transmission rank are fed back, it is able to further decrease a table volume of the layer combinations. For instance, if each of the node 1, the node 2 and the node 3 supports the rank 1 and the total transmission rank is 2, a table of layer combinations can be represented as Table 7 or Table 8 in the following.

[Table 7]

| Index | {node 1}{node 2} {node 3} | Index | {node 1} {node 2} {node 3} | Index | {node 1} {node 2} {node 3} |
|---|---|---|---|---|---|
| 0 | {L1}{L2}{L2} | 1 | {L2}{L1}{L2} | 2 | {L2}{L2}{L1} |

[Table 8]

| Index | {L1}{L2}{L3}... | Index | {L1}{L2}{L3}... | Index | {L1}{L2}{L3}... |
|---|---|---|---|---|---|
| 0 | {ml}{m2,m3} | 1 | {m2}{m1,m3} | 2 | {m3{m1,m2} |

Seventhly, if the node 1, the node 2 and the node 3 support the rank 2, the rank 1 and the rank 1, respectively and the total transmission rank is 3, a table of layer combinations can be represented as Table 9 or Table 10 in the following.

[Table 9]

| Index | {node 1} {node 2} {node 3} | Index | {node 1} {node 2} {node 3} | Index | {node 1} {node 2} {node 3} |
|---|---|---|---|---|---|
| 0 | {L1L2}{L1}{L3} | 1 | {L1L2}{L2}{L3} | 2 | {L1L2}{L3}{L1} |
| 3 | {L1L2}{L3}{L2} | 4 | {L1L2}{L3}{L3} | | |

[Table 10]

| Index | {L1}{L2}{L3}... | Index | {L1}{L2}{L3}... | Index | {L1}{L2}{L3}... |
|---|---|---|---|---|---|
| 0 | {m1,m3}{m2}{m4 } | 1 | {m1}{m2,m3}{m4 } | 2 | {m1,m4}{m2}{m 3} |
| 3 | {m1}{m2,m4}{m3 } | 4 | {m1}{m2}{m3,m4 } | | |

eighthly, if the node 1, the node 2 and the node 3 support the rank 1, the rank 2 and the rank 1, respectively and the total transmission rank is 3, a table of layer combinations can be represented as Table 9 or Table 11 in the following.

[Table 11]

| Index | {node 1} {node 2} {node 3} | Index | {node 1} {node 2} {node 3} | Index | {node 1} {node 2} {node 3} |
|---|---|---|---|---|---|
| 0 | {L1}{L2,L3}{L1} | 1 | {L1}{L2,L3}{L2} | 2 | {L1}{L2,L3}{L3} |
| 3 | {L2}{L2,L3}{L1} | 4 | {L3}{L2,L3}{L1} | | |

Comparing Table 9 and Table 11 to each other, it can be observed that the tables substantially correspond to the same layer combinations by differing from each other only in layer index and sequence assigned to each node. This is identical to a case that the node 1, the node 2 and the node 3 support the rank 1, the rank 1 and the rank 2, respectively. Hence, when rank values supported by the respective nodes are sorted, if the configurations are identical, it can be represented as one table of representative layer combinations. For example with reference to Table 9 and Table 11, if rank combinations of the respective nodes (e.g., a rank of the node 1, a rank of the node 2 and a rank of the node 3) correspond to (2, 1, 1), (1, 2, 1) and (1, 1, 2), all layer combinations of (1, 2, 1) and (1, 1, 2) can be represented using a table of layer combinations for (2, 1, 1).

For instance, when a table of representative layer combinations is determined with reference to the rank combination (2, 1, 1) of the respective nodes, if a rank combination of the respective nodes corresponds to (1, 2, 1), the user equipment and the network remap the node 1, the node 2 and the node 3 into node' 2, node' 1 and node' 3. Subsequently, the user equipment selects an index 0 from the table of the layer combinations and is then able to feed back it to the network. According to the index 0 in the table of the representative layer combinations, the node 1, the node 2 and the node 3 correspond to {L1L2}, {L1} and {L3}, respectively. Yet, due to the remapping, the network recognizes them as {L2}, {L2L3} and {L1}, which indicates the index 3 of Table 11 having a rank combination of the respective nodes correspond to (1, 2, 1). In the same manner, if a rank combination of the respective nodes corresponds to (1, 1, 2), the user equipment and the network can remap the node 1, the node 2 and the node 3 into node' 2, node' 3 and node' 1, respectively.

In particular, the user equipment and the network sorts the ranks of the respective nodes, remap node indexes, and are then able to exchange information on the relationship of the layers per node using the table of the representative layer combinations. The ranks of the respective nodes can be sorted in ascending or descending order. And, this sorting method can be determined in advance between the user equipment and the network or may be determined by the network. Between the nodes having the same rank, the sorting can be performed in a manner of enabling a node having a low node index before the remapping to have a low or high node index after the remapping.

Meanwhile, according to the 1st and 2nd embodiments, the process for the user equipment to feed back the channel state information is described with reference to the respective nodes. For instance, if there are two rank-2 based nodes, the user equipment feeds back the rank-2 based PMI or precoding value for each of the nodes. And, the user equipment feeds back information on the correlation between the nodes, information on layer combinations, CPMI and the like.

In addition, the user equipment can feed back the channel state information on the entire nodes. In doing so, the channel state information may correspond to PMI or precoding value. For instance, when there are two rank-2 based nodes, if a layer combination of them is 4, the user equipment can feed back the rank-4 based PMI or precoding value corresponding to the entire nodes. In doing so, the PMI or precoding value can be fed back by replacing an existing value or may be fed back in a manner of being newly added separately from the existing value.

In particular, when the user equipment initially feeds back the channel state information on the respective nodes, the user equipment calculates the corresponding value based on the PMI or precoding value for each of the nodes. After a combination to be used has been determined from the entire rank combinations, the user equipment recalculates the PMI or precoding value for the entire nodes based on the determined rank and is then able to feed back the recalculated value.

The above-described embodiments may correspond to combinations of elements and features of the present invention in prescribed forms. And, it may be able to consider that the respective elements or features may be selective unless they are explicitly mentioned. Each of the elements or features may be implemented in a form failing to be combined with other elements or features. Moreover, it may be able to implement an embodiment of the present invention by combining elements and/or features together in part. A sequence of operations explained for each embodiment of the present invention may be modified. Some configurations or features of one embodiment may be included in another embodiment or can be substituted for corresponding configurations or features of another embodiment. And, it is apparently understandable that a new embodiment may be configured by combining claims failing to have relation of explicit citation in the appended claims together or may be included as new claims by amendment after filing an application.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## INDUSTRIAL APPLICABILITY

Accordingly, a method of transmitting and receiving control information according to the present invention is available for various wireless communication systems such as 3GPP LTE/LTE-A, IEEE 802 and the like.

## Claims

1. A method of transmitting channel state information by a user equipment in a distributed multi-node system, the method comprising:

   receiving a request for reporting channel state information on a plurality of nodes from a network;
   calculating the channel state information on the plurality of the nodes; and
   transmitting the calculated channel state information to the network,
   wherein the channel state information includes information on correlation between a plurality of the nodes and wherein the information on the correlation includes an index in a table of layer combination representing an inter-node correlation level.

2. The method of claim 1, wherein the information on the correlation includes rank information on each of a plurality of the nodes.

3. The method of claim 1, wherein the information on the correlation includes information on a full transmission rank.

4. The method of claim 1, wherein the table of the layer combination is determined depending on a rank for each of a plurality of the nodes and a full transmission rank.

5. The method of claim 4, wherein when ranks for the plurality of the nodes are sorted by a predetermined reference, if a same configuration is provided, a same layer combination table is used.

6. A method of receiving channel state information by a network in a distributed multi-node system, the method comprising:

   transmitting a request for reporting channel state information on a plurality of nodes; and
   receiving the channel state information on the plurality of the nodes,
   wherein the received channel state information includes information on correlation between the plurality of the nodes and
   wherein the information on the correlation includes an index in a table of layer combination representing an inter-node correlation level.

7. The method of claim 6, wherein the information on the correlation includes rank information on each of a plurality of the nodes.

8. The method of claim 6, wherein the information on the correlation includes information on a full transmission rank.

9. The method of claim 6, wherein the table of the layer combination is determined depending on a rank for each of the plurality of the nodes and a full transmission rank.

10. The method of claim 9, wherein when ranks for the plurality of the nodes are sorted by a predetermined reference, if a same configuration is provided, a same layer combination table is used.

11. An apparatus for transmitting channel state information in a distributed multi-node system, the apparatus comprising:

   a transmitter;
   a receiver; and
   a processor controlling the receiver to receive a request for reporting channel state information on a plurality of nodes from a network, the processor calculating the channel state information on the plurality of the nodes, the processor controlling the transmitter to transmit the calculated channel state information to the network,
   wherein the channel state information includes information on correlation between the plurality of the nodes and
   wherein the information on the correlation includes an index in a table of layer combination representing an inter-node correlation level.

12. The apparatus of claim 11, wherein the information on the correlation includes rank information on each of the plurality of the nodes.

13. The apparatus of claim 11, wherein the information on the correlation includes information on a full transmission rank.

14. The apparatus of claim 11, wherein the table of the layer combination is determined depending on a rank for each of the plurality of the nodes and a full transmission rank.

15. The apparatus of claim 14, wherein when ranks for the plurality of the nodes are sorted by a predetermined reference, if a same configuration is provided, a same layer combination table is used.

16. An apparatus for receiving channel state information in a distributed multi-node system, the apparatus comprising:

   a transmitter;
   a receiver; and
   a processor controlling the transmitter to transmit a request for reporting channel state information on a plurality of nodes, the processor controlling the receiver to receive the channel state information on the plurality of the nodes,
   wherein the received channel state information includes information on correlation between the plurality of the nodes and

wherein the information on the correlation includes an index in a table of layer combination representing an inter-node correlation level.

17. The apparatus of claim 16, wherein the information on the correlation includes rank information on each of a plurality of the nodes.

18. The apparatus of claim 16, wherein the information on the correlation includes information on a full transmission rank.

19. The apparatus of claim 16, wherein the table of the layer combination is determined depending on a rank for each of the plurality of the nodes and a full transmission rank.

20. The apparatus of claim 19, wherein when ranks for the plurality of the nodes are sorted by a predetermined reference, if a same configuration is provided, a same layer combination table is used.

# FIG. 1

EP 2 698 928 A1

FIG. 2

Nod

Base station

# FIG. 3

Network                                                    User equipment

S110 — Request report of channel state information on plurality of nodes

Calculate PMI and/or CPMI for each node — S120

Transmit calculated PMI and/or CPMI and information on correlation level — S130

# FIG. 4

Network                                                                                          User equipment

S210 — Request report of channel state information on plurality of nodes

Calculate PMI and/or
CPMI for each node                                    — S220

Transmit calculated PMI and/or CPMI and
index information in table of layer combinations       — S230

# EP 2 698 928 A1

| INTERNATIONAL SEARCH REPORT | International application No. |
|---|---|
| | **PCT/KR2012/001729** |

**A. CLASSIFICATION OF SUBJECT MATTER**

***H04B 7/04(2006.01)i***

According to International Patent Classification (IPC) or to both national classification and IPC

**B. FIELDS SEARCHED**

Minimum documentation searched (classification system followed by classification symbols)
H04B 7/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multi, dispersion, channel state information, correlation, layer, index, rank

**C. DOCUMENTS CONSIDERED TO BE RELEVANT**

| Category* | Citation of document, with indication, where appropriate, of the relevant passages | Relevant to claim No. |
|---|---|---|
| A | R1-110269, "Performance evaluation of intrasite coordinated beamforming," 3GPP TSG RAN WG1 #63bis, 21 January 2011<br>See section 2. | 1-20 |
| A | R1-110466, "Review of proposals for UE feedback supporting CoMP," 3GPP TSG RAN WG1 #63bis, 21 January 2011<br>See section 4. | 1-20 |
| A | R1-110106, "High-level view of existing CoMP schemes proposed for Rel-11," 3GPP TSG RAN WG1 #63bis, 21 January 2011<br>See section 2. | 1-20 |
| A | R1-110483, "Views on CoMP evaluation methodology," 3GPP TSG RAN WG1 #63bis, 21 January 2011<br>See section 1. | 1-20 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 AUGUST 2012 (31.08.2012) | **31 AUGUST 2012 (31.08.2012)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/001729**

| Patent document cited in search report | Publication date | Patent family member | Publication date |
|---|---|---|---|
| NONE | | | |

Form PCT/ISA/210 (patent family annex) (July 2009)